# EUROPEAN PATENT SPECIFICATION

(11) **EP 0 863 418 B1**
(45) Date of publication and mention of the grant of the patent: **15.10.2003**
(21) Application number: 98103515.7
(22) Date of filing: 27.02.1998
(51) Int. Cl.: G02B 6/38

(54) **Optical fibre ferrule sleeve material, split sleeve and method of manufacturing a split sleeve**
Hülsenmaterial für faseroptische Steckerstifte, geschlitzte Hülse und Verfahren zur Herstellung einer geschlitzten Hülse
Matière de manchon pour viroles de fibres optiques, manchon fendu et procédé de fabrication d'un manchon fendu

(30) Priority: 06.03.1997 JP 5214597
(43) Date of publication of application: 09.09.1998
(73) Proprietor: SEIKO INSTRUMENTS INC., Chiba-shi, Chiba 261 (JP)
(72) Inventor: Shouji, Setsuo c/o Nasutekku Precision Co., Ltd., Tokyo (JP); Tsunemi, Masahiko c/o Nasutekku Precision Co., Ltd, Tokyo (JP)
(74) Representative: Rupprecht, Kay, Dipl.-Ing.

(56) References cited:
- EP-A- 0 590 586
- DE-A- 3 725 676
- DE-A- 19 629 510
- PATENT ABSTRACTS OF JAPAN vol. 016, no. 155 (P-1338), 16 April 1992 -& JP 04 006507 A (FURUKAWA ELECTRIC CO LTD:THE), 10 January 1992,
- PATENT ABSTRACTS OF JAPAN vol. 015, no. 344 (P-1245), 30 August 1991 & JP 03 130706 A (FUJITSU LTD), 4 June 1991,

## Description

### BACKGROUND OF THE INVENTION

This invention relates to a split sleeve material, a split sleeve and a method of manufacturing a split sleeve. The split sleeve material is used to make the split sleeve. The split sleeve is adapted to connect two ferrules which hold optical fibers in their central axes.

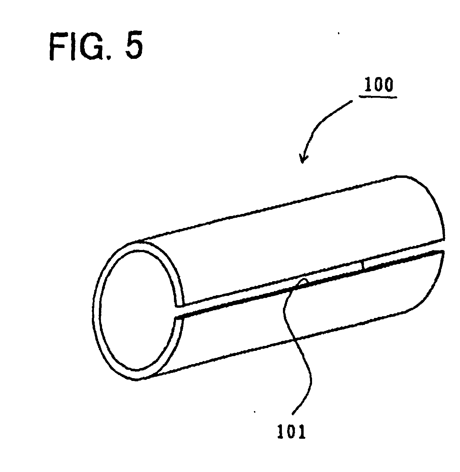

Conventionally, split sleeves 100 as shown in Fig. 5 are being used to easily photo-coupling to each other ferrules for holding an optical fiber, or the like. The split sleeve 100 as shown in Fig. 5 is made of ceramics such as zirconia, which is usually formed by sintering a cylindrical body and then lapping an inner surface and then forming a slit 101 by grinding. Such sleeves are known from EP 0 590 586 A.

However, there is a problem that, since the ceramics such as zirconia is very high in hardness, it takes much labor to form the slit 101 by grinding.

On the other hand, there is another problem that, if the slit 101 is formed from a sintering stage, the entire shape is deformed.

Also, there is a problem that the shape having one strip of a slit 101 provided in the cylindrical body as above tends to cause variations in inner diameter dimension and there is a fear that the center somewhat deviates to degrade in alignment stability. Therefore, for example, the coupling loss becomes large where coupling between ferrules holding an optical fiber. The present invention has been made in view of such situations, and it is the object to provide a split sleeve material easy to manufacture and by which a split sleeve excellent in alignment stability is obtainable, and split sleeve, and a method of manufacturing a split sleeve.

### SUMMARY OF THE INVENTION

A split sleeve material, that solves the above problem, adapted for forming a split sleeve for fitting rod members therein from respective sides to thereby place the rod members at their tip surfaces in abutment against each other, shows the features of claim 1.

The split sleeve material of the invention is for being formed into a split sleeve by cutting the annular end portions.

A split sleeve of the present invention adapted for fitting rod members therein from respective sides to thereby place the rod members at their tip surfaces in abutment against each other, has the features of claim 3.

A method of manufacturing a split sleeve adapted for fitting therein rod members from respective sides to thereby place the rod members at their tip surfaces in abutment against each other, is set forth in claim 4.

### BRIEF DESCRIPTION OF THE DRAWINGS

Figs. 1A and 1B are perspective views of a split sleeve material and a split sleeve.
Figs. 2A and 2B are perspective views of a split sleeve material and a split sleeve according to an embodiment of the present invention.
Figs. 3A and 3B are perspective views of a split sleeve material and a split sleeve.
Figs. 4A and 4B are perspective views of a split sleeve material and a split sleeve.
Figs. 5 is a perspective view of a split sleeve according to the conventional art.

### DETAILED DESCRIPTION OF THE INVENTION

Explanations will be made hereinbelow on embodiments of the present invention by the drawings.

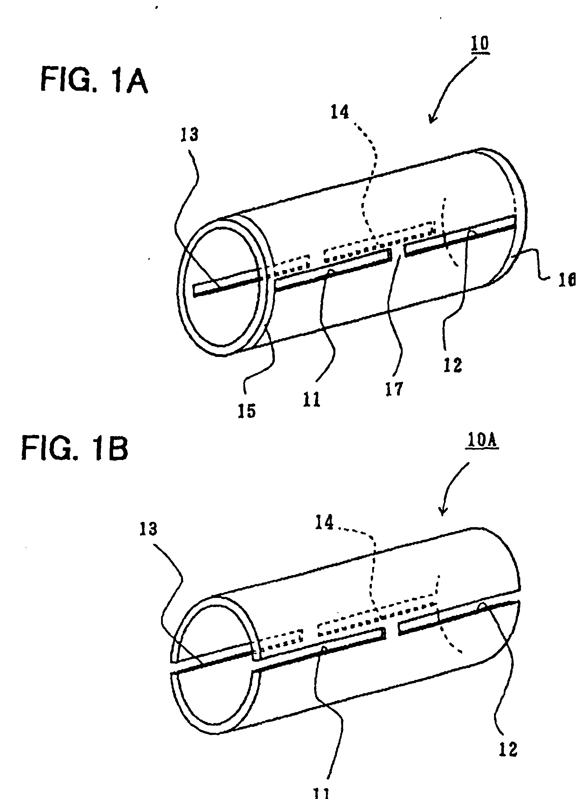

Fig. 1A is a perspective view of a split sleeve material, while Fig. 1B is a perspective view of a sleeve obtained from the same sleeve material.

As shown in Fig. 1A, the split sleeve material 10 has substantially a cylindrical shape formed with axially-extending penetrating grooves 11 - 14 respectively at circumferentially opposite two locations thereof. These penetrating grooves 11 - 14 are not formed up to the respective axial end portions. At respective end portions of the split groove material 10, annular end portions 15 and 16 are provided where no penetrating groove 11 - 14 is formed in its circumferential direction. An annular portion 17 is also formed at an axially central portion so that the annular portion 17 is positioned between the penetrating groove 11, 13 and the penetrating groove 12, 14.

The split sleeve material 10 like this employs, as a material, yttria-added partially-stabilized zirconia (ZrO₂. Y₂O₃ (Y₂O₃: contained by 3% in mol) which is temporarily formed in a shape as stated above and thereafter formed, for example, by heating at 150°C and further sintered at a high temperature of approximately 1500°C. Incidentally, the inner peripheral surface may be lapped as required after sintering. Also, there is no necessity of grinding an opening end face of the penetrating groove 11 - 14 so that it may be in a sintered skin as it is without necessity of grinding.

The split sleeve material 10 of Fig. 1A is formed into a split sleeve 10A as shown in Fig. 1B by cutting the annular end portions 15 and 16 at the respective ends to open one end of each of the penetrating grooves.

This split sleeve 10A has the penetrating grooves arranged symmetrical in the circumferential direction and the axial direction so that it is extremely high in alignment stability. Also, the split groove 10A like this is very difficult to form by the method of cutting the slits by grinding as the conventional.

### Embodiment:

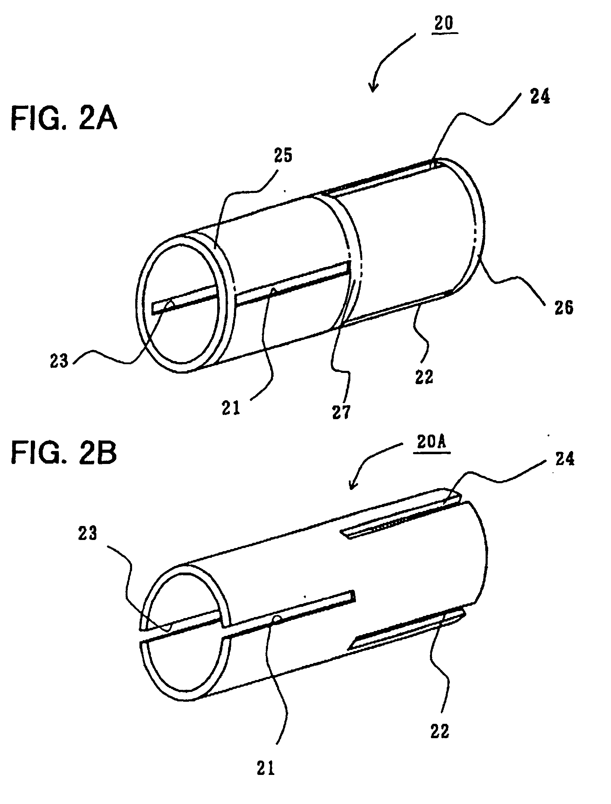

Fig. 2A is a perspective view of a split sleeve material according to a present invention, while Fig. 2B is a perspective view of a sleeve obtained from the same sleeve material.

As shown in Fig. 2A, the sleeve material 20 of the present embodiment has substantially a cylindrical shape formed with axially-extending penetrating grooves 21 - 24 respectively at circumferentially opposite two locations. At respective end portions and an axially central portion, annular end portions 25, 26 and 27 are provided that are not formed with the penetrating groove 21 - 24 in the circumferential direction. Here, the penetrating grooves 22 and 24 adjacent the annular end portion 26 are opposite in a diametrical direction but the penetrating grooves 21 - 24 are deviated therebetween by 90 degrees in the circumferential direction.

The split sleeve material 20 of Fig. 2A is formed into a split sleeve 20A as shown in Fig. 2B by cutting the annular end portions 25 and 26 at the respective ends to open one end of each of the penetrating grooves.

This split sleeve 20A has the penetrating grooves arranged symmetrical in the circumferential direction and further in the axial direction so that it is extremely high in alignment stability. Also, the split groove 20A like this is very difficult to form by a method of cutting the slits by grinding as the conventional.

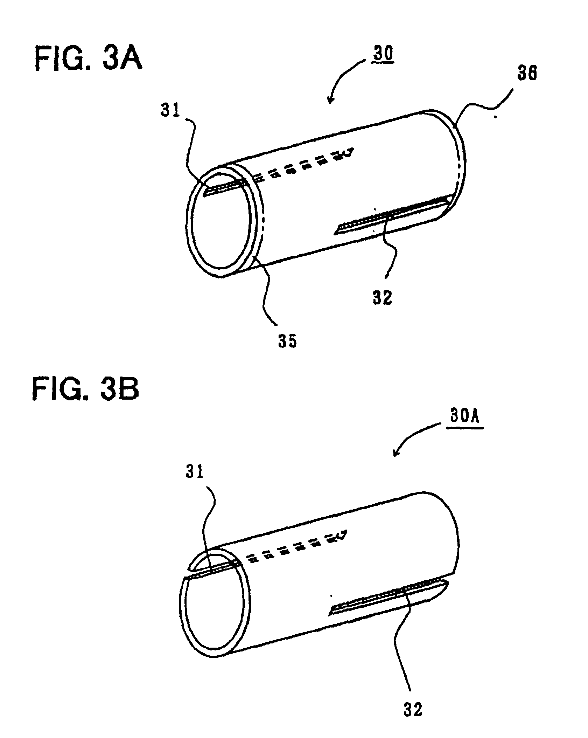

Fig. 3A is a perspective view of a split sleeve material, while Fig. 3B is a perspective view of a sleeve obtained from the same sleeve material.

As shown in Fig. 3A, the sleeve material 30 has substantially a cylindrical shape formed with axially-extending penetrating grooves 31 and 32 respectively extending in the axial direction at circumferentially opposite two locations. At respective end portions, annular end portions 35 and 36 are provided that are not formed with the penetrating groove 31 and 32 in the circumferential direction. Here, the penetrating grooves 31 and 32 are formed at locations opposite in a diametrical direction, but the penetrating groove 31 adjacent the annular end portion 35 is not extended up to the annular groove 36 and the penetrating groove 32 adjacent the annular end portion 36 is not extended up to the annular portion 35. However, the penetrating grooves 31 and 32 are overlapped with each other in the axially central portion so that no annular portion is provided at the central portion. The split sleeve material 30 of Fig. 3A is formed into a split sleeve 30A as shown in Fig. 3B by cutting the annular end portions 35 and 36 at the respective ends to open one end of each of the penetrating grooves.

This split sleeve 20A has the penetrating grooves arranged symmetrical in the circumferential direction and the axial direction so that it is extremely high in alignment stability. Also, the split groove 20A like this is very difficult to form by making the slits through grinding as the conventional.

This split sleeve 30A is wholly symmetrical in arrangement of the penetrating grooves, and very high in alignment stability. Also, the split sleeve 30A like this is difficult to form by the method of cutting a slit by grinding as the conventional.

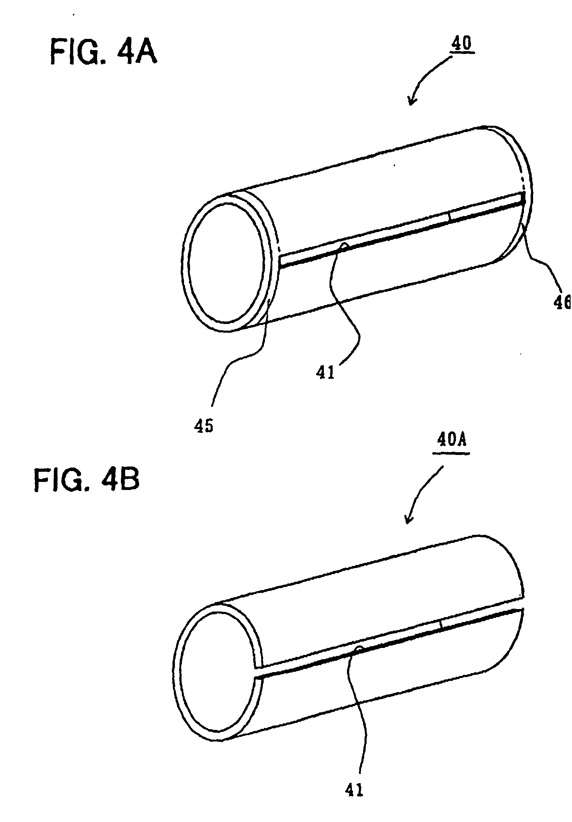

Fig. 4A is a perspective view of a split sleeve material, while Fig. 4B is a perspective view of a sleeve obtained from the same sleeve material.

As shown in Fig. 4A, the split sleeve material 40 has substantially a cylindrical shape formed with an axially-extending penetrating groove 41 respectively extending in the axial direction at a circumferentially one location. At respective end portions, annular end portions 45 and 46 are provided that are not formed with the penetrating groove 45 and 46 in the circumferential direction. The split sleeve material *40 of* Fig. 4A is formed into a split sleeve 40A as shown in Fig. 4B by cutting the annular end portions 35 and 36 at the respective ends to open one end of each of the penetrating grooves.

Although this split sleeve 40A is similar in shape to the conventional one. However, the manufacturing method is quite different and so that an effect is provided that is easy to manufacture as compared to the conventional.

As stated above, according to the present invention, since the penetrating groove of the split groove is formed during sintering, the manufacture is very easy as compared to the conventional. Further, a symmetrical form of a split sleeve can be made, which is accordingly excellent in alignment stability.

## Claims

1. A split sleeve material (20) for forming a split sleeve adapted for fitting rod members therein from respective sides to thereby place said rod members at their tip surfaces in abutment against each other, wherein said split sleeve material (20) is generally in a cylindrical form with slits (21 - 24) extending in an axial direction and, at respective edges of the split sleeve material, with annular end portions (25, 26), in which the slits (21 - 24) do not extend,
**characterized in that**
the slits (21 - 24) are at opposite two locations spaced apart from each other by 90 degrees in the circumferential direction of the split sleeve material, that an annular portion (27) is provided at an axial central position of the split sleeve material, in which the slits do not extend, and that said split sleeve material consists of ceramic material.

2. Split sleeve material according to claim 1,
**characterized in that**
the respective slits (21 - 24) extend to only one of said annular end portions (25, 26) at the respective edges.

3. A split sleeve (20A) adapted for fitting rod members therein from respective sides to thereby place said rod members at their tip surfaces in abutment against each other, wherein said split sleeve (20A) is generally in a cylindrical form with slits (21 - 24) extending axially,
**characterized in that**
the slits (21 - 24) are at opposite two locations spaced apart from each other by 90 degrees in the circumferential direction of the split sleeve and extend to the edges of the sleeve, respectively, that an annular portion (27) is provided at an axial central position of the split sleeve, in which the slits do not extent, and that said split sleeve (20A) consists of ceramic material.

4. A method of manufacturing a ceramic split sleeve (10A, 20A, 30A, 40A) adapted for fitting rod members therein from respective sides to thereby place said rod members at their tip surfaces in abutment against each other,
**characterized by**
forming at least one axially extending slit (11 - 14; 21 - 24; 31 - 32; 41) in said ceramic split sleeve (10A, 20A, 30A, 40A) with a cylindrical form during sintering, wherein the slit(s) (11 - 14; 21 - 24; 31 - 32; 41) do not extend to the edges of the split sleeve (10A, 20A, 30A, 40A) thereby leaving annular end portions (15, 16, 25, 26, 35, 36, 45, 46) of the split sleeve (10A, 20A, 30A, 40A), and by cutting away the annular end portions (15, 16, 25, 26, 35, 36, 45, 46) to open the end(s) of said slit(s) (11 - 14; 21 - 24; 31 - 32; 41).

## Patentansprüche

1. Material (20) für geschlitzte Hülsen zur Herstellung einer geschlitzten Hülse, die zum Einpassen von Stangenelementen von beiden Seiten aus ausgeführt ist, um dadurch die Stangenelemente an ihren Spitzenoberflächen aneinander zur Anlage zu bringen, wobei das Material (20) für geschlitzte Hülsen im Allgemeinen eine zylindrische Form mit sich in axialer Richtung erstreckenden Schlitzen (21 - 24) und an beiden Kanten des Materials für geschlitzte Hülsen ringförmige Endabschnitte (25, 26) aufweist, in die sich die Schlitze (21 - 24) nicht erstrecken,
**dadurch gekennzeichnet, dass**
sich die Schlitze (21 - 24) an zwei einander gegenüberliegenden, voneinander um 90° in Umfangsrichtung des Materials für geschlitzte Hülsen beabstandeten Stellen befinden, dass ein ringförmiger Abschnitt (27) in einer in axialer Richtung mittleren Position des Materials für geschlitzte Hülsen vorgesehen ist, in den sich die Schlitze nicht erstrecken, und dass das Material für geschlitzte Hülsen ein Keramikmaterial ist.

2. Material für geschlitzte Hülsen nach Anspruch 1,
**dadurch gekennzeichnet, dass**
sich die jeweiligen Schlitze (21 - 24) nur zu einem der ringförmigen Endabschnitte (25, 26) an beiden Kanten erstrecken.

3. Geschlitzte Hülse (20A), die zum Einpassen von Stangenelementen von beiden Seiten aus ausgeführt ist, um dadurch die Stangenelemente an ihren Spitzenoberflächen aneinander zur Anlage zu bringen, wobei die geschlitzte Hülse (20A) im Allgemeinen eine zylindrische Form mit sich in axialer Richtung erstreckenden Schlitzen (21 - 24) aufweist,
**dadurch gekennzeichnet, dass**
sich die Schlitze (21 - 24) an zwei einander gegenüberliegenden, voneinander um 90° in Umfangsrichtung der geschlitzten Hülse beabstandeten Stellen befinden und sich zu beiden Kanten der Hülse erstrecken, dass ein ringförmiger Abschnitt (27) in einer in axialer Richtung mittleren Position der geschlitzten Hülse vorgesehen ist, in den sich die Schlitze nicht erstrecken, und dass die geschlitzte Hülse (20A) aus Keramikmaterial besteht.

4. Verfahren zur Herstellung einer geschlitzten Keramikhülse (10A, 20A, 30A, 40A), die zum Einpassen von Stangenelementen von beiden Seiten aus ausgeführt ist, um dadurch die Stangenelemente an ihren Spitzenoberflächen aneinander zur Anlage zu bringen,
**gekennzeichnet durch**
Ausformen mindestens eines sich in axialer Richtung erstreckenden Schlitzes (11 - 14; 21 - 24; 31 - 32; 41) in der geschlitzten Keramikhülse (10A, 20A, 30A, 40A) mit zylindrischer Form während des Sinterns, wobei der (die) Schlitz(e) (11 - 14; 21 - 24; 31 - 32; 41) sich nicht in die Kanten der geschlitzten Hülse (10A, 20A, 30A, 40A) erstreckt bzw. erstrecken, wodurch ringförmige Endabschnitte (15, 16, 25, 26, 35, 36, 45, 46) der geschlitzten Hülse (10A, 20A, 30A, 40A) verbleiben, und **durch** Abschneiden der ringförmigen Endabschnitte (15, 16, 25, 26, 35, 36, 45, 46) zum Öffnen des Endes bzw. der Enden des Schlitzes bzw. der Schlitze (11 - 14; 31 - 32; 41).

## Revendications

1. Matériau pour manchon fendu (20) pour former un manchon fendu adapté à recevoir à l'intérieur des éléments en forme de tige depuis des côtés respectifs pour placer grâce à cela lesdits éléments en forme de tige en butée l'un contre l'autre au niveau de leurs surfaces terminales, ledit matériau pour manchon fendu (20) étant généralement en forme cylindrique avec des fentes (21-24) s'étendant dans une direction axiale et présentant, au niveau de bordures respectives du matériau pour manchon fendu, des parties terminales annulaires (25, 26) dans lesquelles les fentes (21-24) ne s'étendent pas,
**caractérisé en ce que** les fentes (21-24) se trouvent à deux emplacements opposés espacés l'un de l'autre de 90 degrés dans la direction circonférentielle du matériau pour manchon fendu, **en ce qu'**une partie annulaire (27) est prévue au niveau d'une position centrale axiale du matériau pour manchon fendu, dans laquelle les fentes ne s'étendent pas, et **en ce que** ledit matériau pour manchon fendu est constitué de céramique.

2. Matériau pour manchon fendu selon la revendication 1, **caractérisé en ce que** les fentes respectives (21-24) s'étendent vers une seule desdites parties terminales annulaires (25, 26) au niveau des bordures respectives.

3. Manchon fendu (20A) adapté à recevoir à l'intérieur des éléments en forme de tige depuis des côtés respectifs pour placer grâce à cela lesdits éléments en forme de tige en butée l'un contre l'autre au niveau de leurs surfaces terminales, dans lequel ledit manchon fendu (20A) a généralement une forme cylindrique avec des fentes (21-24) s'étendant axialement,
**caractérisé en ce que** les fentes (21-24) se trouvent à deux emplacements opposés espacés l'un de l'autre de 90 degrés dans la direction circonférentielle du manchon fendu et s'étendent vers les bordures du manchon, respectivement, **en ce qu'**une partie annulaire (27) est prévue au niveau d'une position centrale axiale du manchon fendu dans laquelle les fentes ne s'étendent pas, et **en ce que** ledit manchon fendu est constitué de matériau en céramique.

4. Procédé de fabrication d'un manchon fendu en céramique (10A, 20A, 30A, 40A) adapté à recevoir à l'intérieur des éléments en forme de tige depuis des côtés respectifs pour placer grâce à cela lesdits éléments en forme de tige en butée l'un contre l'autre au niveau de leurs surfaces terminales,
**caractérisé en ce que** l'on forme au moins une fente qui s'étend axialement (11-14 ; 21-24 ; 31-32 ; 41) dans ledit manchon fendu en céramique (10A, 20A, 30A, 40A) avec une forme cylindrique pendant le frittage, de sorte que la ou les fente(s) (11-14 ; 21-24 ; 31-32 ; 41) ne s'étend(ent) pas jusqu'aux bordures du manchon fendu (10A, 20A, 30A, 40A) en laissant ainsi des parties terminales annulaires (15, 16, 25, 26, 35, 36, 45, 46) du manchon fendu (10A, 20A, 30A, 40A), et **en ce que** l'on enlève par découpe les parties terminales annulaires (15, 16, 25, 26, 35, 36, 45, 46) afin d'ouvrir l'extrémité/les extrémités de ladite/desdites fente(s) (11-14 ; 21-24 ; 31-32 ; 41).
